(19) Europäisches Patentamt
European Patent Office
Office européen des brevets

(11) EP 1 804 087 A1

(12) EUROPEAN PATENT APPLICATION
published in accordance with Art. 158(3) EPC

(43) Date of publication:
04.07.2007 Bulletin 2007/27

(51) Int Cl.:
*G02B 1/11* (2006.01)    *B32B 7/02* (2006.01)
*G02B 1/10* (2006.01)

(21) Application number: 05793582.7

(22) Date of filing: 14.10.2005

(86) International application number:
PCT/JP2005/018983

(87) International publication number:
WO 2006/043486 (27.04.2006 Gazette 2006/17)

(84) Designated Contracting States:
AT BE BG CH CY CZ DE DK EE ES FI FR GB GR
HU IE IS IT LI LT LU LV MC NL PL PT RO SE SI
SK TR

(30) Priority: 20.10.2004 JP 2004304990

(71) Applicant: NOF CORPORATION
Tokyo 150-0013 (JP)

(72) Inventors:
• NOJIMA, Takayuki
Chita-gun, Aichi 4702316 (JP)
• NOGUCHI, Shotaro
Chita-gun, Aichi 4702345 (JP)

(74) Representative: Maiwald, Walter
Maiwald Patentanwalts GmbH
Elisenhof
Elisenstrasse 3
80335 München (DE)

(54) **REFLECTION-REDUCING LAYERED FILM AND DISPLAY DEVICE USING THE SAME**

(57) An antireflective laminated film that simultaneously improves the antireflection performance and suppresses coloring includes an interference layer (12) arranged on a transparent resin film (11), a hard coat layer (13) arranged on the interference layer (12), and an antireflection layer (14) arranged on the hard coat layer (13). The antireflective laminated film satisfies the following requirements in order to simultaneously improve the antireflection performance and to suppress coloring: (i) The maximum amplitude of the reflectance curve in a wavelength range of 500 nm to 650 nm is 1% or less, (ii) the photopic reflectance Y for the CIE standard illuminant D65 is 2% or less, and (iii) the ab chroma value $C_{ab}$ for the CIE standard illuminant D65 is 10 or less.

# Fig.1

## EP 1 804 087 A1

**Description**

Technical Field

The present invention relates to an antireflective laminated film that is provided in a display device and is hardly colored, and a display device using the same.

Background Art

In recent years, thin and large display devices, such as plasma display panels (PDPs) and liquid crystal display (LEDs) have been developed. In order to improve the visibility of large display devices, an antireflective treatment is applied to the screen.

In general, the antireflection treatment of a display device aims at lowering the reflectance of the display device in wavelengths giving about the maximum human visual sensitivity (550 to 600 nm). An antireflection film, wherein reflectance in wavelengths approximately 550 to 600 nm is extremely lowered, is provided in the display device. However, the antireflection film of such a design has a reflection spectrum of so-called "V-shape", and when light is radiated on the antireflection film, it is strongly colored in reddish violet or blue. The colored antireflection film has a problem of loosing the color reproducibility of the display device. Especially when the background color is a dark color (such as black), there is a problem in that the coloration of the antireflection film is significant, and it is difficult to reproduce black as black. antireflection film is significant, and it is difficult to reproduce black as black.

A hard coat layer having a thickness of about 1 to 10 $\mu$m is often arranged on a transparent resin film to increase the surface hardness of the antireflective laminated film. When a hard coat layer having a refractive index different from the refractive index of the transparent resin film and a thickness of 1 to 10 $\mu$m is laminated, uneven optical interference as in an oil film on water is produced in the interface of the both layers. The uneven optical interference causes problems of impairing the appearance of the display device and significantly lowering the quality of the display device. There is a problem that, if the thickness of the hard coat film is 1 to 3 $\mu$m, coloration of the hard coat film in red and green due to the above-described interference impairs color reproducibility of the display device as well as the coloration of the antireflection layer.

A solution addressing these problems has been proposed. There has been proposed an antireflection film wherein a multilayer structure consisting, from the outermost layer, of an antireflection layer, a hard coat layer, and an interference layer on a transparent resin film; and the maximum amplitude of the reflectance in a wavelength range of 500 nm to 650 nm is 1.0% or less (for example, refer to Patent Document 1). Patent Document 1: Japanese Patent Laid-Open Publication No. 2003-177209

Disclosure of the Invention

In the technique described in Patent Document 1, although uneven optical interference can be lowered, the antireflection performance is insufficient, and the coloration of the antireflection film cannot be satisfactory suppressed.

An object of the present invention is to provide an antireflective laminated film having improved antireflection performance and suppressed coloration, and a display device using the same.

In order to achieve the above-described object, according to an aspect of the present invention, an antireflective laminated film comprising a transparent resin film, a hard coat layer arranged on the transparent resin film, and an antireflection layer arranged on the hard coat layer is provided. The antireflective laminated film has a reflection spectrum represented by a ripple-like reflectance curve having peak-to-peak amplitudes, and the maximum value (X) of the peak-to-peak amplitudes within a wavelength range of 500 nm to 650 nm is 1% or less, the photopic reflectance Y for the CIE standard illuminant D65 of the antireflective laminated film is 2% or less, and the ab chroma value $C_{ab}$ for the CIE standard illuminant D65 of ntireflective laminated film, represented by the following formula, $C_{ab} = \{(a^*)^2 + (b^*)^2\}^{1/2}$, is 10 or less.

According to another aspect of the present invention, a display device including the above-described antireflective laminated film provided on a front surface of a display is provided.

The preferable antireflective laminated film has a haze value defined in JIS K 7136 of 1% or less.

In one embodiment, the antireflection layer includes a low refractive index layer having a refractive index lower than the hard coat layer, and the refractive index of the low refractive index layer is 1.28 to 1.45.

In one embodiment, the antireflection layer includes a low refractive index layer having a refractive index lower than the refractive index of the hard coat layer, and a high refractive index layer having a refractive index higher than the refractive index of the low refractive index layer. The difference between the refractive index of the high refractive index layer and the refractive index of the hard coat layer is 0.05 or less.

In one embodiment, the refractive index of the transparent resin film is 1.45 to 1.55, the difference between the refractive index of the hard coat layer and the refractive index of the transparent resin film is 0.03 or less, and the thickness of the hard coat layer is 1 to 10 μm.

In one embodiment, the refractive index of the transparent resin film is 1.55 to 1.70; an interference layer, a hard coat layer, and a layer having a refractive index lower than the refractive index of the hard coat layer are sequentially laminated on a surface of the transparent resin film; the refractive index of the hard coat layer is 1.45 to 1.55; the thickness of the hard coat layer is 1 to 10 μm; the interference layer has a refractive index represented by the following formula: Refractive index of interference layer = {(refractive index of transparent resin film) x (refractive index of hard coat layer)}$^{1/2}$ ± 0.03; the thickness of the optical film in the interference layer is 125 to 165 nm; and the refractive index of the interference layer is a value between the refractive index of the transparent resin film and the refractive index of the hard coat layer.

In one embodiment, the transparent resin film is a triacetyl cellulose film or an acryl film, and the antireflection layer contains hollow silicon oxide particles or a fluorine-containing organic compound.

In one embodiment, the transparent resin film is a polyethylene terephthalate film, and the antireflection layer contains hollow silicon oxide particles or a fluorine-containing organic compound.

Brief Description of the Drawings

Fig. 1 is a sectional view of an antireflective laminated film of Example 1;
Fig. 2 is a reflection spectrum of an antireflective laminated film of Example 1;
Fig. 3 is a reflection spectrum of an antireflective laminated film of Example 6;
Fig. 4 is a reflection spectrum of an antireflective laminated film of comparative Example 1; and
Fig. 5 is a reflection spectrum of an antireflective laminated film of comparative Example 2.

Best Mode for Carrying Out the Invention

An embodiment of the present invention will now be described in detail below.

The present inventors have found a fact that to satisfy both an improvement in the antireflection performance and a reduction in coloration, it is essential that the maximum value of the peak-to-peak amplitude in the reflectance curve within the wavelength range of 500 nm to 650 nm is 1% or less, and the photopic reflectance Y for the CIE standard illuminant D65 is 2% or less, and the ab chroma value $C_{ab}$ for the CIE standard illuminant D65 is 10 or less, and they have completed the antireflective laminated film of the present invention. The antireflective laminated film is configured to satisfy all the requirements of the above-described maximum value, the photopic reflectance, and the ab chroma value $C_{ab}$.

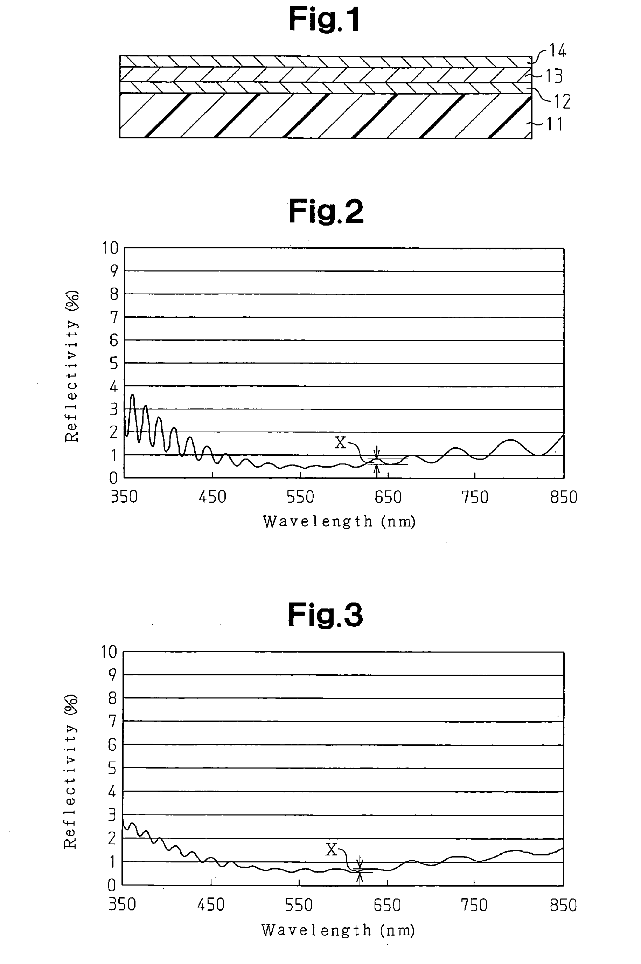

As shown in Fig. 1, the antireflective laminated film of an embodiment of the present invention is provided with a hard coat layer 13 formed on a transparent resin film 11, and a refection reducing layer 14 formed on the hard coat layer 13.

It is preferable that the transparent resin film is formed of a transparent resin material having a refractive index (n) within the range of 1.45 to 1.70. Examples of transparent resin materials include triacetyl cellulose (TAC, n = 1.48), an acryl film (AC, n = 1.50), ARTON (bulky cyclic olefin resin manufactured by JSR Corporation, n = 1.51), ZEONOR (bulky cyclic olefin resin manufactured by Zeon Corporation, n = 1.53), polyethylene terephthalate (PET, n = 1.65), polycarbonate (PC, n = 1.59), polyarylate (PAR, n = 1.60), and polyether sulfone (PES, n = 1.65). The TAC film and the AC film are preferable as transparent resin films having a lower refractive index. The PET film is preferable as a transparent resin film having a higher refractive index.

The thickness of a transparent resin film is preferably 25 to 400 μm, more preferably 50 to 200 μm.

The antireflective laminated film according to the present invention is configured so that the maximum value of the peak-to-peak amplitude of the reflectance curve within the wavelength range of 500 nm to 650 nm is 1% or less. The reflection spectrum of the antireflective laminated film is represented by a ripple-like reflectance curve (refer to Fig. 2). The amplitude of the reflectance curve (peak-to-peak amplitude) is continuously varied due to optical interference between the hard coat layer and the transparent resin film. The peak-to-peak amplitude refers to the difference between the maximal value and the minimal value of the reflectance curve, and calculated or determined from the reflection spectrum on the surface of the antireflective laminated film. The maximum value of the peak-to-peak amplitude is more preferably 0.5% or less. The maximum value exceeding 1% is not preferable, because the uneven optical interference becomes significant, the appearance quality of the display device is lowered, uneven color in red and green due to uneven optical interference occur, and the color reproducibility of the display device is lowered.

The photopic reflectance Y of the antireflective laminated film for the CIE standard illuminant D65 is 2% or less, more preferably 1% or less. The CIE standard illuminant D65 is the illuminant (the radiation whose relative spectral distribution is specified of the entire wavelength range affecting the color perception of the irradiated body) wherein the relative spectral distribution is specified by the International Illumination Committee (CIE). The photopic reflectance Y is calculated as the tristimulus value of the object color by the reflection in the XYZ chromatic system defined in JIS Z8701 by using the relative spectral distribution. The photopic reflectance Y exceeding 2% is not preferable, because the antireflection effect of the antireflective laminated film is weakened, the reflection of the background into the screen cannot be reduced, and the color reproducibility of the display device is lowered.

The maximum reflectance of the antireflective laminated film to the light within the wavelength range sensed by human eyes as light, that is visible light (380 nm to 780 nm) is preferably 4% or less, more preferably 3% or less. By reducing the maximum reflectance within the visible range, the effect of the present invention is further improved. The reason is that when the antireflection performance of the antireflective laminated film having the maximum reflectance to visible light exceeding 4% is improved, the antireflective laminated film tends to be strongly colored; in the contrary, when the coloration of the antireflective laminated film is to be suppressed, the antireflection performance tends to be lowered.

The ab chroma value $C_{ab}$ of the antireflective laminated film for the CIE standard illuminant D65 represented by the following formula, $C_{ab} = \{(a^*)^2 + (b^*)^2\}^{1/2}$, is 10 or less, preferably 5 or less.

The ab chroma value $C_{ab}$ is a quantity approximately correlated to chroma in the color space CIE 1976 L*a*b* color system having a substantially uniform perceptual rate recommended by CIE in 1976. The ab chroma value $C_{ab}$ exceeding 10 is not preferable, because the surface of the antireflective laminated film is significantly colored, and the color reproducibility of the display device is lowered.

The haze value defined in JIS K7136 of the antireflective laminated film is preferably 1% or less, more preferably 0.5% or less. The installation of the antireflective laminated film having a haze value exceeding 1% in a display device is not preferable, because the surface is seen to be cloudy white, and the color reproducibility of the display device is significantly lowered.

Although the uneven optical interference of the antireflective laminated film can be reduced by keeping the maximum amplitude of the reflectance curve within the wavelength range of 500 nm to 650 nm at 1% or less, the ingenuity described below is required. When a transparent resin film having a refractive index of 1.45 to 1.55 is used, it is important that the difference between the refractive index of the hard coat layer and the refractive index of the transparent resin film is 0.03 or less, and the thickness of the hard coat layer is 1 to 10 $\mu$m. More preferably, the difference between the refractive index of the hard coat layer and the refractive index of the transparent resin film is 0.02 or less.

When a transparent resin film having a refractive index of 1.55 to 1.70 is used, it is desired to reduce uneven optical interference by sequentially laminating an interference layer and a hard coat layer on the transparent resin film. In this case, the refractive index of the hard coat layer is 1.45 to 1.55, the thickness of the hard coat layer is 1 $\mu$m to 10 $\mu$m, the refractive index of the interference layer is within the range represented by the following formula, and the optical film thickness of the interference layer is 125 to 165 nm.

$$\text{Refractive index of interference layer} = \{(\text{refractive index of transparent resin film})\} \times (\text{refractive index of hard coat layer})\}^{1/2} \pm 0.03$$

The refractive index of the interference layer is smaller than the refractive index of the transparent resin film, and larger than the refractive index of the hard coat layer. The optical film thickness means the product of the refractive index (n) of a layer and the thickness (d) of the layer, which is (n x d).

Further preferable refractive index of the interference layer is: $\{(\text{refractive index of transparent resin film})\} \times (\text{refractive index of hard coat layer})\}^{1/2} \pm 0.02$. When the refractive index of the interference layer equals to $\{(\text{refractive index of transparent resin film})\} \times (\text{refractive index of hard coat layer})\}^{1/2}$, the uneven optical interference is most reduced.

The refractive index and optical film thickness of the interference layer out of the above-described range is not preferable, because the effect to reduce the uneven optical interference of light is lowered. Similarly, the refractive index of the hard coat layer less than 1.45 or exceeding 1.55 is also not preferable, because the adequate effect to reduce the uneven optical interference of light cannot be obtained. The thickness of the hard coat layer less than 1 $\mu$m is not preferable, because a sufficient surface strength cannot be obtained. On the other hand, the thickness of the hard coat layer exceeding 10 $\mu$m is not also preferable, because the problems of the lowering of flexural resistance and the like are caused.

The refractive index and the thickness of the interference layer can be within the above-described range, and the materials and methods for forming the layer are not particularly limited. The examples of the materials for the interference layer include acrylates, silicon compounds, metals, and metal oxides.

The interference layer may have the function to improve the adhesiveness of the transparent resin film and the hard coat layer. The interference layer and the transparent resin film can be integrally formed by stretching or casting. For example, when a transparent resin film is formed of PET, an adhesive layer is formed by applying an adhesive consisting of a polyester resin. If the refractive index and thickness of the adhesive layer satisfy the requirements of the interference layer, the adhesive layer can be used as the interference layer.

The methods for forming the hard coat layer are not particularly limited. The examples of the materials for the hard coat layer includes monofunctional (meth)acrylates, polyfunctional (meth)acrylates, and the cured products of reactive silicon compounds, such as tetraethoxysilane. The term (meth)acrylates used herein include both methacrylic esters and acrylic esters. Particularly preferable materials for the hard coat layer are the polymerized cured products of the compositions containing ultraviolet curable polyfunctional acrylates, which excel in productivity and hardness.

The examples of ultraviolet curable polyfunctional acrylates include acrylate derivatives of polyfunctional alcohols, such as dipentaerythritol hexaacrylate, tetramethylolmethane tetraacrylate, tetramethylolmethane triacrylate, trimethylolpropane triacrylate, 1,6-hexanediol diacrylate, 1,6-bis (3-acryloiloxy-2-hydroxypropyloxy) hexane; polyethylene glycol diacrylate; and polyurethane acrylate.

Compositions containing ultraviolet curable polyfunctional acrylates and other compositions can also be used. The examples of the other components include inorganic or organic particulate fillers, inorganic or organic particulate pigments, and other inorganic or organic fine particles; and additives, such as polymers, polymerization initiators, polymerization inhibitors, antioxidants, dispersing agents, surface active agents, light stabilizers, and leveling agents.

Next, the antireflection layer can be of a single-layer structure or a two-layer structure. In the case of a single-layer structure, a layer having a refractive index lower than the refractive index of the hard coat layer (low refractive index layer) is formed on the hard coat layer. In the case of a two-layer structure, a layer having a relatively high refractive index is arranged on the hard coat layer, and a layer having a relatively low refractive index is arranged on the high refractive index layer. Although the reflectance can be more effectively lowered when the antireflection layer has a multilayer structure composed of three or more layers, if the number of layers increases, uneven color easily occurs due to the slight unevenness of layers, the appearance tends to worsen, and the color reproducibility tends to be lowered.

It is preferable that the antireflection layer includes a low refractive index layer and a high refractive index layer, and a difference in refractive index between the high refractive index layer and the refractive index of the hard coat layer is 0.05 or less. Thereby, the reflection spectrum can be maintained flat, and the antireflection performance can be further improved.

Methods for forming the antireflection layer are not particularly limited, and for example, a dry coating method, a roll coating method, a spin coating method, and a dip coating method can be used.

In order to exert the function of the antireflection layer, it is required that the low refractive index layer to be formed has a lower refractive index than the immediate lower layer, and the refractive index is preferably 1.28 to 1.45. In the refractive index exceeds 1.45, it is difficult to obtain a sufficient antireflection effect by a wet coating method; and if the refractive index is less than 1.28, the formation of a sufficiently hard layer tends to be difficult. When the antireflection layer has a two-layer structure, since the high refractive index layer must have the refractive index higher than the refractive index of the hard coat layer, the refractive index thereof is preferably within a range of 1.46 to 1.60.

Although the thickness of the antireflection layer depends on the kind and shape of the transparent resin film and the structure of the antireflection layer, it is preferable that the thickness of a layer is a thickness equal to the wavelength of visible light or smaller. To reduce the reflection of the visible light, it is preferable that the optical thickness of the high refractive index layer $n_H \cdot d_H$ and the low refractive index layer of the low refractive index layer $n_L \cdot d_L$ satisfy the following formula:

$$500\sim \ \le \ 4 \ n_H \cdot d_H \ (nm) \ \le \ 750$$

$$400 \ \le \ 4 \ n_L \cdot d_L \ (nm) \ \le \ 650$$

where $n_H$ and $n_L$ are the refractive indices of the high refractive index layer and the low refractive index layer, respectively; and $d_H$ and $d_L$ are the thicknesses of the high refractive index layer and the low refractive index layer, respectively.

Materials composing the high refractive index layer are not particularly limited, but inorganic materials or organic materials can be used. The examples of inorganic materials include the fine particles of zinc oxide, titanium oxide, cerium oxide, aluminum oxide, tantalum oxide, yttrium oxide, ytterbium oxide, zirconium oxide, and indium tin oxide (hereafter, abbreviated as ITO). Particularly, the use of conductive fine particles such as indium tin oxide is preferable because the surface resistivity can be lowered, and further the antistatic capability can be imparted. On the other hand, as organic materials, for example, polymerized and cured products of compositions containing polymerizing monomers having fluorene skeletons can be used.

The high refractive index layer containing inorganic fine particles can also be formed using a wet coating method. In this case, polymerizing monomers having a refractive index of less than 1.65 and a composition containing the polymers thereof can be used as a binder in the wet-coating. It is preferable that the average particle diameter of the inorganic fine particles does not significantly exceed the thickness of the layer, and more preferably, the average particle diameter is 0.1 $\mu$m. As required, the surfaces of the fine particles can be modified by various kinds of coupling agents or the like. The examples of the various kinds of coupling agents include organic substituted silicon compounds; alkoxides of metals, such as aluminum, titanium, zirconium, and antimony, and the salts of organic acids.

As materials composing the low refractive index layer, inorganic materials, such as silicon oxide, lanthanum fluoride, magnesium fluoride, and cerium fluoride; one or the mixture of fluorine-containing organic compounds; or compositions containing the polymers of fluorine-containing organic compounds can be used. Monomers not containing fluorine (abbreviated as fluorine-free monomers) or the polymers thereof can be used as the binder. Among these, the fine particles of silicon oxide, especially hollow silicon oxide particles or fluorine-containing organic compounds are particularly preferable because of their low refractive indices.

The examples of hollow silicon oxide particles include particles having voids inside the shells, and the particles of fine porous silica. It is preferable that the average particle diameter of the fine particles does not significantly exceed the thickness of the layer, and particularly, the average particle diameter is 0.1 $\mu$m or less. As required, the surfaces of the fine particles can be modified by reactive groups, such as organo-substituted silicon compounds; the alkoxide of a metal, such as aluminum, titanium, zirconium, and antimony; the salts of organic acids; and (meth)acryloil groups. The (meth)acryloil groups are particularly effective for raising the hardness of the low refractive index layer.

The examples of the above-described fluorine-containing organic compounds include monomers of fluorine-containing monofunctional (meth)acrylate, fluorine-containing polyfunctional (meth)acrylate, fluorine-containing itaconic esters, fluorine-containing maleic esters, and fluorine-containing silicon compounds; and the polymers thereof. From the point of view of reactivity, fluorine-containing (meth)acrylates are preferable, and especially, fluorine-containing polyfunctional (meth)acrylates are particularly preferable from the point of view of hardness and refractive indices. By curing these fluorine-containing organic compounds, a layer having a low refractive index and a high hardness can be formed.

The examples of fluorine-containing polyfunctional (meth)acrylates include 1-(meth)acryloiloxy-1-perfluoroalkyl methane and 1-(meth)acryloiloxy-2-perfluoroalkyl ethane. Preferable perfluoroalkyl groups are straight chain, branched, and cyclic groups having 1 to 8 carbon atoms.

As fluorine-containing polyfunctional (meth)acrylates, fluorine-containing difunctional (meth)acrylates, fluorine-containing trifunctional (meth)acrylates, and fluorine-containing tetrafunctional (meth)acrylates are preferable. The examples of fluorine-containing difunctional (meth)acrylates include 1,2-di(meth)acryloiloxy-3-perfluoroalkyl butane, 2-hydroxy-1H,1H,2H,3H,3H-perfluoroalkyl-2',2'-bis{(meth)acryloiloxymethyl} propionate, $\alpha,\omega$-di(meth)acryloiloxymethyl perfluoroalkane, and the mixtures thereof. The preferable perfluoroalkyl groups are straight chain, branched, and cyclic groups having 1 to 11 carbon atoms; and the preferable perfluoroalkane group is a straight-chain group.

The examples of fluorine-containing trifunctional (meth)acrylates include 2-(meth)acryloiloxy-1H,1H,2H,3H, 3H-perfluoroalkyl-2',2'-bis{(meth)acryloiloxymethyl} propionate and the like. The preferable perfluoroalkyl groups are straight chain, branched, and cyclic groups having 1 to 11 carbon atoms.

The examples of fluorine-containing trifunctional (meth)acrylates include $\alpha,\beta,\phi,\omega$-tetrakis{(meth)acryloiloxy}-$\alpha$H,$\alpha$H,$\beta$H,$\gamma$H,$\gamma$H,$\chi$H,$\chi$H,$\phi$H,$\omega$H,$\omega$H-perfluoroalkanes, and the mixture thereof. The preferable perfluoroalkane groups are straight chain groups having 1 to 14 carbon atoms.

A preferable fluorine-containing silicon compound is (1H,1H,2H,2H-perfluoroalkyl) trimethoxysilane. It is preferable that the perfluoroalkyl group is a straight chain, branched, and cyclic groups of having 1 to 10 carbon atoms. The examples of the above-described polymers of fluorine-containing organic compounds or the polymers of other fluorine-containing monomers include strait-chain polymers, such as the homopolymers or copolymers of the above-described fluorine-containing monomers and the copolymers with fluorine-free monomers, polymers wherein carbon rings or heterocyclic rings in the chains, cyclic polymers, and comb polymers. The examples of the above-described fluorine-free monomers include silicon compounds and the like, such as monofunctional or polyfunctional (meth)acrylate and tetraethoxysilane.

To the antireflection layer, additives, such as inorganic or organic pigments, polymers, a polymerization initiator, a photopolymerization initiator, a polymerization inhibitor, an antioxidant, a dispersing agent, a surface active agent, a light stabilizer, and a leveling agent, can be added within a range not to damage the effects of the present invention.

In the antireflective laminated film, an adhesive layer can be formed on the surface of the transparent resin film side. The materials used in the adhesive layer are not particularly limited. To the adhesive layer, one or more functions, such as the shielding of light in a specified wavelength region, the improvement of contrast, and the correction of color tones, can be imparted. For example, in an unfavorable case wherein the color of the transmitted light through the antireflective laminated film takes on a yellow ting, pigments or the like can be added to correct the color tone.

The antireflective laminated film of this embodiment can be used when the effect of improving color reproducibility, the effect of suppressing light uneven optical interference, or the effect of reducing reflection is required. In particular, it can be used in display devices, such as CRTs, plasma displays, and liquid crystal display devices. The antireflective laminated film is directly adhered on the screen of the display device, or adhered to a transparent plate installed on the front surface of the screen.

The effects exerted by the embodiment will be collectively described below.

In the antireflective laminated film of this embodiment, since the photopic reflectance Y for the CIE standard illuminant D65 is designed to be 2% or less, reflection in the surface of the antireflective laminated film can be reduced, and the antireflection performance of the antireflective laminated film can be improved. Since the ab chroma value Cab for the CIE standard illuminant D65 is designed to be 10 or less, the reflection spectrum can be flattened, the difference in the reflectance in the visible region can be reduced, and coloration originated by the antireflective laminated film itself can be suppressed.

Since the antireflective laminated film is designed to have a haze value defined in JIS K 7136 of 1% or less, clear images without turbidity can be obtained.

Since the antireflection layer constituting the antireflective laminated film include a low reflective index layer, and the reflective index of the low reflective index layer is designed to be within a range of 1.28 to 1.45, the above-described photopic reflectance Y can be lowered, and the antireflection performance can be improved.

Since the antireflection layer constituting the antireflective laminated film include a low reflective index layer and a high reflective index layer, and difference in the reflective indices between the high reflective index layer and the hard coat layer is designed to be 0.05 or less, the reflection spectrum can be maintained flat, and the antireflection performance can be further improved.

Since the display device is configured so that the antireflective laminated film is arranged on the front surface of a display device, the above-described effects by the antireflective laminated film can be exerted.

The manufacturing examples, examples, and comparative examples of the present invention will be described. First, the reflective index measurement of a cured product of a coating solution for forming an antireflection layer will be described.

(1) Onto an acrylate plate having a reflective index of 1.49 (trade name: Delaglas A, manufactured by Asahi Kasei Corporation), a coating solution for forming an antireflection layer was applied using a dip coater (manufactured by Sugiyama-Gen Iriki Co., Ltd.). The quantity of the coating solution was adjusted so that a layer having an optical thickness of about 550 nm after drying is formed.

(2) The solvent was removed from the layer of the coating solution to form a dry coating film. As required, ultraviolet ray of 400 mJ were radiated from the UV radiation equipment (manufactured by Iwasaki Electric Co., Ltd.) using a 120-W high pressure mercury lamp in a nitrogen atmosphere to cure the coating solution.

(3) The surface (back face) opposite to the coated layer of an acrylic plate was roughened with sandpaper, and coated with a black paint to prepare a multilayer plate sample. The reflectance of the multilayer plate sample at 400 to 650 nm ($\pm 5°$ regular reflectance) was measured using a spectrophotometer (U-Best V560, manufactured by JASCO Corporation). The minimal value or the maximal value of the reflectance was read.

(4) The refractive index of the coating film was calculated from the extremal value of the reflectance using the following formula.

$$\text{Extremal value of reflectance (\%)}$$
$$= \{\frac{(\text{refractive index of acrylic resin plate}) - (\text{refractive index of layer})^2}{(\text{refractive index of acrylic resin plate}) + (\text{refractive index of layer})^2}\}^2 \times 100$$

The properties of the antireflective laminated film were measured using the following method:

(a) Spectral reflectance
The back face of the antireflective laminated film (the lower surface of the transparent resin film 11 in Fig. 1) was roughened with sandpaper, and coated with a black paint to prepare a multilayer plate sample. The reflection spectrum of the multilayer plate sample was measured using a spectrophotometer (U-Best V560, manufactured by JASCO Corporation). The measured range was between 380 and 780 nm. Thereby, the reflection spectrum of the antireflective laminated film can be measured.

(b) Maximum amplitude of reflectance curve in the wavelength range of 500 nm to 650 nm

The measured reflection spectrum was visually read to determine the maximum amplitude of reflectance in the wavelength range of 500 nm to 650 nm.

(c) Photopic reflectance Y

Using the spectral reflectance at 380 to 780 nm and the relative spectral distribution of the CIE standard illuminant D65, the tristimulus value Y of the object color by reflection in the XYZ color system defined in JIS Z8701 was calculated.

(d) ab chroma value

Using the Spectral reflectance at 380 to 780 nm measured in (a) and the relative spectral distribution of the CIE standard illuminant D65, the color space CIE 1976 L*a*b* color system defined in JIS Z8720 was calculated, and ab chroma value $C_{ab}$ was calculated from a* and b* values.

(e) Haze value

The haze value was measured using a haze meter (NDH 2000, Nippon Denshoku Industries, Co., Ltd.).

(f) Suppression of uneven optical interference

The appearance of the film was observed under a three-wavelength fluorescent light tube, and if uneven optical interference was clearly seen therein, it was then evaluated as poor (x), and if uneven optical interference was little seen, it was then evaluated as good (O).

(g) Suppression of coloration (fastness of black)

Each antireflective laminated film was adhered on a surface of a glass plate (size: 10 cm x 10 cm) using an acrylic adhesive sheet and a black film was adhered on another surface of the glass plate to prepare a sample. The sample was observed under a three-wavelength fluorescent light tube, and a sample with a backside black film looking naturally black was evaluated as good (○), while a sample with a bleached black of its backside film or a vague color unlike black due to significant coloration of its antireflection film were evaluated as poor (x).

[Manufacturing Example 1-1, Preparation of coating solution (IF-1) for forming interference layer]

A coating solution (IF-1) for forming an interference layer was prepared by dissolving or dispersing 30 parts by mass of dipentaerythritol hexaacrylate, 20 parts by mass of tetramethylolmethane triacrylate, 50 parts by mass of fine particles of tin oxide having an average particle diameter of 0.05 $\mu$m, and 2 parts by mass of a photo polymerization initiator (trade name: IRGACURE 907, manufactured by Ciba Specialty Chemicals), in 1000 parts by mass of 2-butanol. The refractive index of the cured product of the coating solution (IF-1) was 1.58.

[Manufacturing Example 1-2, Preparation of coating solution (HC-1) for forming hard coat layer]

A coating solution (HC-1) for forming a hard coat layer was prepared by mixing 70 parts by mass of dipentaerythritol hexaacrylate, 30 parts by mass of 1,6-bis (3-acryloyloxy-2-hydroxypropyloxy) hexane, 4 parts by mass of a photo polymerization initiator (trade name: IRGACURE 184, manufactured by Ciba Specialty Chemicals), and 100 parts by mass of isopropanol. The refractive index of the cured product of the coating solution (HC-1) was 1.52.

[Manufacturing Example 1-3, Preparation of coating solution (HC-2) for forming hard coat layer]

A coating solution (HC-2) for forming a hard coat layer was prepared by mixing 50 parts by mass of dipentaerythritol hexaacrylate, 50 parts by mass of a dispersion of fine silica gel particles (trade name: XBA-ST, manufactured by Nissan Chemical Industries, Ltd.), 4 parts by mass of a photo polymerization initiator (trade name: IRGACURE 184, manufactured by Ciba Specialty Chemicals), and 100 parts by mass of isopropanol. The refractive index of the cured product of the coating solution (HC-2) was 1.49.

[Manufacturing Example 1-4, Preparation of coating solution (AG-1) for forming antiglare hard coat layer]

A coating solution (AG-1) for forming an antiglare hard coat layer was prepared by mixing 96 parts by mass of dipentaerythritol hexaacrylate, 4 parts by mass of cross-linked polystyrene particles having an average particle diameter of 2 $\mu$m (trade name: SX-200H, manufactured by Soken Chemical & Engineering Co., Ltd.), 4 parts by mass of a photo polymerization initiator (trade name: IRGACURE 907, manufactured by Ciba Specialty Chemicals), and 100 parts by mass of a mixed solvent of methyl ethyl ketone/isopropanol = 50/50; agitating and dispersing the mixture at 5000 rpm for one hour in a high-speed disperser; and filtering using a polypropylene filter having a pore diameter of 30 $\mu$m. The refractive index of the cured polymerization product of the coating solution (AG-1) was 1.51.

[Manufacturing Example 1-5, Preparation of coating solution (H-1) for forming high refractive index layer]

A coating solution (H-1) for forming a high refractive index layer was prepared by mixing 10 parts by mass of fine ITO particles having an average particle diameter of 0.07 $\mu$m, 90 parts by mass of tetramethylolmethane triacrylate, 5 parts by mass of a photo polymerization initiator (trade name: KAYACURE BMS, manufactured by Nippon Kayaku Co, Ltd.), and 900 parts by mass of butyl alcohol. The refractive index of the cured polymerization product of the coating solution (H-2) was 1.54.

[Manufacturing Example 1-6, Preparation of coating solution (H-2) for forming high refractive index layer]

A coating solution (H-2) for forming a high refractive index layer was prepared by mixing 70 parts by mass of fine ITO particles having an average particle diameter of 0.07 $\mu$m, 30 parts by mass of tetramethylolmethane triacrylate, 5 parts by mass of a photo polymerization initiator (trade name: KAYACURE BMS, manufactured by Nippon Kayaku Co, Ltd.), and 900 parts by mass of butyl alcohol. The refractive index of the cured polymerization product of the coating solution (H-2) was 1.64.

[Manufacturing Example 1-7, Preparation of coating solution (L-1) for forming low refractive index layer]

A coating solution (L-1) for forming a low refractive index layer was prepared by mixing 40 parts by mass of 1,10-diacryloyloxy-2, 2, 3, 3, 4, 4, 5, 5, 6, 6, 7, 7, 8, 8, 9, 9-hexadecafluorodecane, 120 parts by mass of hollow silica sol (solid content: 20% by mass, average particle size: 60 nm, manufactured by Catalysts & Chemicals Ind. Co., Ltd.), and 5 parts by mass of a photo polymerization initiator (trade name: KAYACURE BMS, manufactured by Nippon Kayaku Co, Ltd.). The refractive index of the cured polymerization product of the coating solution (L-3) was 1.32.

[Manufacturing Example 1-8, Preparation of coating solution (L-2) for forming low refractive index layer]

A coating solution (L-2) for forming a low refractive index layer was prepared by mixing 30 parts by mass of dipentaerythritol hexaacrylate, 140 parts by mass of hollow silica sol (solid content: 20% by mass, average particle size: 60 nm, manufactured by Catalysts & Chemicals Ind. Co., Ltd.), and 5 parts by mass of a photo polymerization initiator (trade name: KAYACURE BMS, manufactured by Nippon Kayaku Co, Ltd.). The refractive index of the cured polymerization product of the coating solution (L-2) was 1.35.

[Manufacturing Example 1-9, Preparation of coating solution (L-3) for forming low refractive index layer]

A coating solution (L-3) for forming a low refractive index layer was prepared by mixing 80 parts by mass of 1,10-diacryloyloxy-2,2,3,3,4,4,5,5,6,6,7,7,8,8,9,9-hexadecafluorodecane, 5 parts by mass of dipentaerythritol hexaacrylate, 60 parts by mass of a dispersion of fine silica gel particles (trade name: XBA-ST, manufactured by Nissan Chemical Industries, Ltd.), and 5 parts by mass of a photo polymerization initiator (trade name: KAYACURE BMS, manufactured by Nippon Kayaku Co, Ltd.). The refractive index of the cured polymerization product of the coating solution (L-3) was 1.40.

[Manufacturing Example 1-10, Preparation of coating solution (L-4) for forming low refractive index layer]

A coating solution (HC-2) for forming a hard coat layer was prepared by mixing 60 parts by mass of tetramethylolmethane triacrylate, 40 parts by mass of a dispersion of fine silica gel particles (trade name: XBA-ST, manufactured by Nissan Chemical Industries, Ltd.), 4 parts by mass of a photo polymerization initiator (trade name: IRGACURE 907, manufactured by Ciba Specialty Chemicals), and 100 parts by mass of isopropanol. The refractive index of the cured product was 1.48.

Example 1

Onto a polyethylene terephthalate (PET) film having a thickness of 100 $\mu$m (trade name: A 4300, manufactured by Toyobo Co., Ltd.), the coating solution IF-1 for forming an interference layer was applied as an interference layer using a spin coater adjusting the thickness of the layer so that the optical film thickness became 145 to 155 nm, dried, and cured by ultraviolet ray of 400 mJ/cm$^2$ in a nitrogen atmosphere.

The coating solution HC-1 for forming a hard coat layer was applied thereon using a bar coater so that the dried film thickness became about 3 $\mu$m, and cured by ultraviolet ray of 400 mJ/cm$^2$. Next, using a spin coater, the coating solution L-1 for forming a low refractive index layer was applied thereon adjusting the thickness of the layer so that the optical film thickness became 105 nm, dried, and cured by ultraviolet ray of 400 mJ/cm$^2$ in a nitrogen atmosphere to fabricate an antireflective laminated film. The schematic sectional view of the obtained antireflective laminated film is shown in Fig. 1. As shown in Fig. 1, a hard coat layer 13 is arranged on the transparent resin film 11 through the interference layer 12, and a low refractive index layer 14 that functions as an antireflection layer is arranged on the surface of the hard coat layer 13.

The evaluation results of the spectral refractivity, photopic reflectance, the maximum amplitude of the reflectance curve at wavelengths of 500 to 650 nm, ab chroma value $C_{ab}$, haze value, the presence of uneven optical interference and suppressed coloration of the antireflective laminated film are shown in Fig. 2 and Table 1. X in Fig. 2 denotes the maximum amplitude within the range of 500 nm to 650 nm in the reflectance curve of the antireflective laminated film of Example 1.

Example 2

An antireflective laminated film was fabricated in the same manner as in Example 1 except that the coating solution for forming the low refractive index layer was substituted by L-2.

Example 3

An antireflective laminated film was fabricated in the same manner as in Example 1 except that the coating solution for forming the low refractive index layer was substituted by L-3.

Example 4

Onto a polyethylene terephthalate (PET) film having a thickness of 100 $\mu$m (trade name: A 4300, manufactured by Toyobo Co., Ltd.), the coating solution IF-1 for forming an interference layer was applied as an interference layer using a spin coater adjusting the thickness of the layer so that the optical film thickness became 145 to 155 nm, dried, and cured by ultraviolet ray of 400 mJ/cm$^2$ in a nitrogen atmosphere.

The coating solution HC-1 for forming a hard coat layer was applied thereon using a bar coater so that the dried film thickness became about 3 $\mu$m, and cured by ultraviolet ray of 400 mJ/cm$^2$. Next, using a spin coater, the coating solution H-1 for forming a high refractive index layer was applied on the hard coat layer adjusting the thickness of the layer so that the optical film thickness became 100 nm, dried, and cured by ultraviolet ray of 400 mJ/cm$^2$ in a nitrogen atmosphere to fabricate a high refractive index layer. Further thereon, using the spin coater, the coating solution L-1 for forming a low refractive index layer was applied adjusting the thickness of the layer so that the optical film thickness became 100 nm, dried, and cured by ultraviolet ray of 400 mJ/cm$^2$ in a nitrogen atmosphere to fabricate an antireflective laminated film.

Example 5

An antireflective laminated film was fabricated in the same manner as in Example 4 except that the coating solution for forming the low refractive index layer was substituted by L-3.

Example 6

Onto a triacetyl cellulose (TAC) film having a thickness of 80 $\mu$m (trade name: KC8UY, manufactured by Konica Minolta Opt, Inc.), the coating solution HC-2 for forming a hard coat layer was applied using a bar coater so that the dried film thickness became about 3 $\mu$m, and cured by ultraviolet ray of 400 mJ/cm$^2$. Next, using a spin coater, the coating solution L-1 for forming a low refractive index layer was applied thereon adjusting the thickness of the layer so that the optical film thickness became 105 nm, dried, and cured by ultraviolet ray of 400 mJ/cm$^2$ in a nitrogen atmosphere to fabricate an antireflective laminated film. X in Fig. 3 denotes the maximum amplitude within the range of 500 nm to 650 nm in the reflectance curve of the antireflective laminated film of Example 6.

Example 7

Onto a triacetyl cellulose (TAC) film having a thickness of 80 $\mu$m (trade name: KC8UY, manufactured by Konica Minolta Opt, Inc.), the coating solution HC-2 for forming a hard coat layer was applied using a bar coater so that the dried film thickness became about 3 $\mu$m, and cured by ultraviolet ray of 400 mJ/cm$^2$. Next, using a spin coater, the coating solution H-1 for forming a high refractive index layer was applied on the hard coat layer adjusting the thickness of the layer so that the optical film thickness became 110 nm, dried, and cured by ultraviolet ray of 400 mJ/cm$^2$ in a nitrogen atmosphere to fabricate a high refractive index layer. Further thereon, using the spin coater, the coating solution L-2 for forming a low refractive index layer was applied adjusting the thickness of the layer so that the optical film thickness became 95 nm, dried, and cured by ultraviolet ray of 400 mJ/cm$^2$ in a nitrogen atmosphere to fabricate an antireflective laminated film.

Example 8

An antireflective laminated film was fabricated in the same manner as in Example 6 except that the transparent resin film was substituted by an acrylic (AC) film having a thickness of 125 $\mu$m (trade name; Technolloy S001, manufactured by Sumitomo Chemical Co., Ltd.).

Comparative Example 1

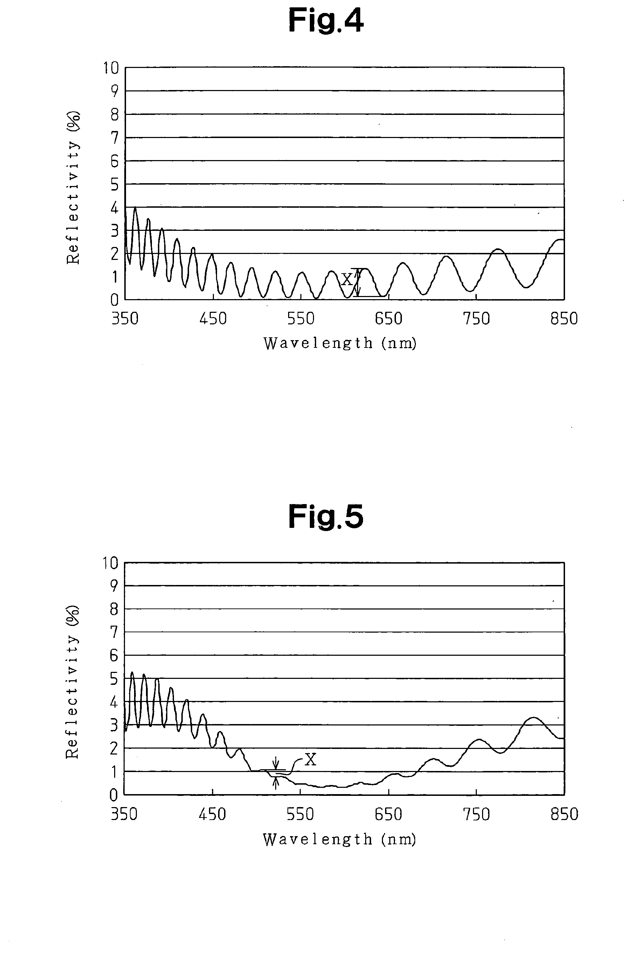

An antireflective laminated film was fabricated in the same manner as in Example 1 except that no interference layer was formed. X in Fig. 4 denotes the maximum amplitude within the range of 500 nm to 650 nm in the reflectance curve of the antireflective laminated film of Comparative Example 1.

Comparative Example 2

An antireflective laminated film was fabricated in the same manner as in Example 5 except that the coating solution for forming the high refractive index layer was substituted by H-2. X in Fig. 5 denotes the maximum amplitude within the range of 500 nm to 650 nm in the reflectance curve of the antireflective laminated film of Comparative Example 2.

Comparative Example 3

An antireflective laminated film was fabricated in the same manner as in Example 5 except that the coating solution for forming the low refractive index layer was substituted by L-4.

Comparative Example 4

An antireflective laminated film was fabricated in the same manner as in Example 7 except that the coating solution for forming the high refractive index layer was substituted by H-2.

Comparative Example 5

An antiglare film was fabricated by applying the coating solution for forming the hard coat layer AG-1 on a triacetyl cellulose (TAC) film having a thickness of 80 $\mu$m (trade name: KC8UY, manufactured by Konica Minolta Opt, Inc.) using a bar coater so that the dried film thickness became about 3 $\mu$m, and curing the solution using ultraviolet ray of 400 mJ/cm$^2$.

The results of the evaluation of Examples 1 to 8 and Comparative Examples 1 to 5 are shown in Tables 1 and 2.

Table 1

| | Examples | | | | | | | |
|---|---|---|---|---|---|---|---|---|
| | 1 | 2 | 3 | 4 | 5 | 6 | 7 | 8 |
| substrate | PET | PET | PET | PET | PET | TAC | TAC | AC |
| refractive index ($n_s$) | 1.65 | 1.65 | 1.65 | 1.65 | 1.65 | 1.47 | 1.47 | 1.5 |

(continued)

| | Examples | | | | | | | |
|---|---|---|---|---|---|---|---|---|
| | 1 | 2 | 3 | 4 | 5 | 6 | 7 | 8 |
| interference layer | IF-1 | IF-1 | IF-1 | IF-1 | IF-1 | none | none | none |
| refractive index ($n_{if}$) | 1.58 | 1.58 | 1.58 | 1.58 | 1.58 | - | - | - |
| hard coat layer | HC-1 | HC-1 | HC-1 | HC-1 | HC-1 | HC-2 | HC-2 | HC-2 |
| refractive index ($n_{HC}$) | 1.52 | 1.52 | 1.52 | 1.52 | 1.52 | 1.49 | 1.49 | 1.49 |
| $(n_s \times n_{HC})^{1/2}$ | 1.58 | 1.58 | 1.58 | 1.58 | 1.58 | - | - | - |
| high refractive index layer | none | none | none | H-1 | H-1 | none | H-1 | none |
| low refractive index layer | L-1 | L-2 | L-3 | L-1 | L-3 | L-1 | L-2 | L-1 |
| maximum transmittance difference | 0.3 | 0.3 | 0.3 | 0.3 | 0.3 | 0.2 | 0.2 | 0.1 |
| photopic reflectance Y | 0.5 | 0.9 | 1.7 | 0.4 | 1.4 | 0.7 | 0.6 | 0.7 |
| ab chroma Cab | 7.9 | 7.5 | 5.0 | 7.7 | 6.9 | 6.4 | 9.3 | 6.4 |
| haze value | 0.4 | 0.4 | 0.4 | 0.4 | 0.4 | 0.3 | 0.3 | 0.3 |
| suppression of uneven optical interference | ○ | ○ | ○ | ○ | ○ | ○ | ○ | ○ |
| suppression of coloration | ○ | ○ | ○ | ○ | ○ | ○ | ○ | ○ |

Table 2

| | Comparative Examples | | | | |
|---|---|---|---|---|---|
| | 1 | 2 | 3 | 4 | 5 |
| substrate | PET | PET | PET | TAC | TAC |
| refractive index ($n_s$) | 1.65 | 1.65 | 1.65 | 1.47 | 1.47 |
| interference layer | none | IF-1 | IF-1 | none | none |
| refractive index ($n_{if}$) | - | 1.58 | 1.58 | - | - |
| hard coat layer | HC-1 | HC-1 | HC-1 | HC-2 | AG-1 |
| refractive index ($n_{HC}$) | 1.52 | 1.52 | 1.52 | 1.49 | 1.51 |
| $(n_s \times n_{HC})^{1/2}$ | - | 1.58 | 1.58 | - | - |
| high refractive index layer | none | H-2 | H-1 | H-2 | none |
| low refractive index layer | L-1 | L-3 | L-4 | L-2 | none |
| maximum transmittance difference | 1.2 | 0.3 | 0.3 | 0.3 | 0.0 |
| photopic reflectance | 0.7 | 0.6 | 2.9 | 0.2 | 1.9 |
| ab chroma Cab | 7.2 | 22.5 | 4.0 | 18.8 | 0.5 |
| haze value | 0.4 | 0.4 | 0.4 | 0.3 | 8.0 |
| suppression of uneven optical interference | x | O | ○ | ○ | O |
| suppression of coloration | x | x | x | x | x |

Since the antireflective laminated films of Examples 1 to 5 were provided with interference layers having adequate refractive indices, and the antireflective laminated films of Examples 6 to 8 were provided with hard coat layers having adequate refractive indices, the maximum amplitude of the reflectance curve within wavelengths from 500 nm to 650 nm is 0.5% or less, and uneven optical interference was reduced. The antireflective laminated films of Examples 1 to 8 had photopic reflectance Y of 2% or less, ab chroma value $C_{ab}$ of 10 or less, and haze value of 1% or less; and had both excellent appearance and low reflectance, and excelled in the fastness of black and color reproducibility.

In the antireflective laminated film of Comparative Example 1 including no interference layer, the maximum amplitude of the reflectance curve of wavelengths from 500 nm to 650 nm exceeded 1.0%, the uneven optical interference of the hard coat layer was significant, an oil-film pattern was seen on the surface of the antireflection layer, and both suppression of coloration (fastness of black) and color reproducibility were unsatisfactory. In Comparative Examples 2 and 4, ab chroma value $C_{ab}$ exceeded 10, the reddish violet coloration of the antireflection layer was significant, and suppression of coloration and color reproducibility were extremely lowered. In Comparative Example 3, although the ab chroma value $C_{ab}$ was small and the coloration of the antireflection layer was slight, since the photopic reflectance exceeded 2.0% and the antireflection performance was low, the reflection of background was significant, and suppression of coloration and color reproducibility were unsatisfactory. In Comparative Example 5, due to the antiglare properties, the haze value exceeded 1.0%, the entire film was seen as to be bleached, and both suppression of coloration and color reproducibility were unsatisfactory.

Example 9

Acrylic adhesive sheets were evenly adhered on the back faces of the antireflective laminated films of Examples 1 to 8 (lower surface of the transparent resin film 11 in Fig. 1) using a hand roller. Then, the adhesive sheets were directly adhered on the screens of plasma displays. Appearance of uneven optical interference when the display was shut down, and color reproducibility when the display was turned on were evaluated. As a result, when the antireflective laminated films of Examples 1 to 8 were used, uneven optical interference was not distinct, and the reproducibility of primary colors, white and black was excellent. The display device was observed under a three-wavelength fluorescent light, and the degree of uneven optical interference was evaluated. Color reproducibility was evaluated by how natural colors looked when an image from an image software for a personal computer was displayed on the display device and red, blue, green, white, and black were sequentially displayed.

Comparative Examples 6

The antireflective laminated films of Comparative Examples 1 to 5 were adhered on plasma displays on the same manner as in Example 9, and appearance of uneven optical interference when the display was shut down, and color reproducibility when the display was turned on were evaluated. As a result, in the film of Comparative Example 1, uneven optical interference was clearly observed, the quality of its appearance was significantly lowered, red and green coloration originating from the uneven optical interference of the hard coat layer was marked, and the color reproducibility of the plasma display was unsatisfactory. In the films of Comparative Examples 2 and 4, since the reddish violet coloration of the antireflection layer was significant, and the color mixed to the color of the image was displayed, color tones were unnatural. When the film of Comparative Example 3 was used, the reflection of background was significantly reflected onto the surface of the display, the color tones on the display were unnatural. Finally, in the film using Comparative Example 5, since antiglare properties were imparted, haze was high, the entire screen looked bleached, and both black fastness and color reproducibility were poor.

The embodiments can also be modified as follows:

A hard coat layer and an antireflection layer can also be arranged on both surfaces of the transparent resin film.
The antireflection performance can also be improved by reducing difference in haze values between different directions of the reflection of light.
It is preferable to secure luminance by elevating the light transmittance to, for example, 90% or more.

**Claims**

1. An antireflective laminated film comprising:

    a transparent resin film;
    a hard coat layer arranged on the transparent resin film; and
    an antireflection layer arranged on the hard coat layer; **characterized in that**:

        the antireflective laminated film has a reflection spectrum represented by a ripple-like reflectance curve having peak-to-peak amplitudes, and the maximum value (X) of the peak-to-peak amplitudes within a wavelength range of 500 nm to 650 nm is 1% or less,
        the photopic reflectance Y for the CIE standard illuminant D65 of the antireflective laminated film is 2% or less, and
the ab chroma value $C_{ab}$ for the CIE standard illuminant D65 of the antireflective laminated film represented by a formula, $C_{ab} = ((a^*)^2 + (b^*)^2)^{1/2}$, is 10 or less.

2.  The antireflective laminated film according to claim 1, **characterized in that** the haze value defined in JIS K 7136 is 1% or less.

3.  The antireflective laminated film according to claim 1, **characterized in that** the antireflection layer includes a low refractive index layer having a refractive index lower than the refractive index of the hard coat layer, and the refractive index of the low refractive index layer is 1.28 to 1.45.

4.  The antireflective laminated film according to claim 1, **characterized in that** the antireflection layer includes a low refractive index layer having a refractive index lower than the refractive index of the hard coat layer, and a high refractive index layer having a refractive index higher than the refractive index of the low refractive index layer; and a difference between the refractive index of the high refractive index layer and the refractive index of the hard coat layer is 0.05 or less.

5.  The antireflective laminated film according to any of claims 1 to 4, **characterized in that** the refractive index of the transparent resin film is 1.45 to 1.55, a difference between the refractive index of the hard coat layer and the refractive index of the transparent resin film is 0.03 or less, and the hard coat layer has a thickness of 1 to 10 μm.

6.  The antireflective laminated film according to any of claims 1 to 4, **characterized in that** the refractive index of the transparent resin film is 1.55 to 1.70; an interference layer, a hard coat layer, and at least a layer having a refractive index lower than the refractive index of the hard coat layer are sequentially arranged on a surface of the transparent resin film; the refractive index of the hard coat layer is 1.45 to 1.55; the hard coat layer has a thickness of 1 to 10 μm; the interference layer has a refractive index represented by the following formula:

```
Refractive index of interference layer = {(refractive index of transparent resin film) × (refractive index of hard coat layer)}^1/2 ± 0.03;
```

the interference layer has an optical thickness of 125 to 165 nm; and
the refractive index of the interference layer is a value between the refractive index of the transparent resin film and the refractive index of the hard coat layer.

7.  The antireflective laminated film according to any of claims 1 to 4, **characterized in that** the transparent resin film is a triacetyl cellulose film or an acryl film, and the antireflection layer contains hollow silicon oxide particles or a fluorine-containing organic compound.

8.  The antireflective laminated film according to any of claims 1 to 4, **characterized in that** the transparent resin film is a polyethylene terephthalate film, and the antireflection layer contains hollow silicon oxide particles or a fluorine-containing organic compound.

9.  A display device comprising the antireflective laminated film according to any of claims 1 to 8 provided on a front surface of a display.

# Fig.1

# Fig.2

# Fig.3

# Fig.4

# Fig.5

<table>
<tr><td colspan="2" align="center">**INTERNATIONAL SEARCH REPORT**</td><td>International application No.<br>PCT/JP2005/018983</td></tr>
</table>

A.   CLASSIFICATION OF SUBJECT MATTER
*G02B1/11*(2006.01), *B32B7/02*(2006.01), *G02B1/10*(2006.01)

According to International Patent Classification (IPC) or to both national classification and IPC

B.   FIELDS SEARCHED

Minimum documentation searched (classification system followed by classification symbols)
B02B1/11, B32B7/02, G02B1/10

Documentation searched other than minimum documentation to the extent that such documents are included in the fields searched
Jitsuyo Shinan Koho          1922-1996   Jitsuyo Shinan Toroku Koho    1996-2006
Kokai Jitsuyo Shinan Koho    1971-2006   Toroku Jitsuyo Shinan Koho    1994-2006

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 2003-177209 A  (NOF Corp.),<br>27 June, 2003 (27.06.03),<br>All drawings; particularly, Claims 1 to 11;<br>Par. Nos. [0023], [0040] to [0041], [0047] to [0056]<br>(Family: none) | 1-9 |
| Y | JP 2004-98420 A  (Dainippon Printing Co., Ltd.),<br>02 April, 2004 (02.04.04),<br>Full text; all drawings; particularly, Claim 1;<br>Par. Nos. [0012], [0044] to [0046]; Fig. 7<br>& JP 3679074 B2 | 1-9 |

☒   Further documents are listed in the continuation of Box C.          ☐   See patent family annex.

| | |
|---|---|
| *     Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    11 January, 2006 (11.01.06) | Date of mailing of the international search report<br>    24 January, 2006 (24.01.06) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2005/018983

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2004-233454 A  (Nitto Denko Corp.),<br>19 August, 2004 (19.08.04),<br>Full text; particularly, Claims 3, 5 to 6;<br>Par. Nos. [0006], [0008], [0017]<br>(Family: none) | 1-9 |
| Y | JP 10-177101 A  (Sekisui Chemical Co., Ltd.),<br>30 June, 1998 (30.06.98),<br>Full text; particularly, Claim 1; Par. No.<br>[0007]<br>(Family: none) | 1,4-5,7-9 |
| Y | JP 2003-292831 A  (Toppan Printing Co., Ltd.),<br>15 October, 2003 (15.10.03),<br>Full text; particularly, Claim 1<br>(Family: none) | 7 |
| Y | JP 2004-272198 A  (Dainippon Printing Co.,<br>Ltd.),<br>30 September, 2004 (30.09.04),<br>Full text; particularly, Claim 4; Par. Nos.<br>[0015] to [0020]<br>(Family: none) | 7 |

Form PCT/ISA/210 (continuation of second sheet) (April 2005)

**EP 1 804 087 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003177209 A